# EUROPEAN PATENT APPLICATION

(11) **EP 4 529 756 A1**
(43) Date of publication of application: **02.04.2025**
(21) Application number: 24200724.3
(22) Date of filing: 17.09.2024
(51) Int. Cl.: A01D 34/74

(54) **SYSTEM OF LEVELING A MOWER DECK**

(30) Priority: 26.09.2023 US 202363540474 P
(71) Applicant: Techtronic Cordless GP, Anderson, SC 29621 (US)
(72) Inventor: D'ANGELO, Adam, Anderson, 29621 (US)
(74) Representative: Novagraaf Group

(57) **Abstract**

A lawnmower or deck leveling system for the same may include a frame, a moveable deck, and an adjustable linkage assembly connecting the moveable deck to the frame. The adjustable linkage assembly may include a front linkage arm pivotably attached to the frame to support a front end of the moveable deck, a rear linkage arm defining a fixed rear-arm length from an upper rear mounting point to a lower rear mounting point to support a rear end of the moveable deck, and a rear linkage mount supported on the frame and connected to the rear linkage arm at the upper rear mounting point. At least one linkage mount may include a moveable interface defining a vertical lift path on which the upper mount point is moveable relative to the frame between a high position and a low position disposed below the high position.

## Description

### CROSS-REFERENCE TO RELATED APPLICATIONS

The present application claims priority to U.S. Provisional Patent Application No. 63/540,474 filed on September 26, 2023, the disclosure of which is incorporated by reference herein in its entirety.

### FIELD OF THE DISCLOSURE

The present disclosure relates generally to systems and methods of leveling a mower deck associated with a lawnmower.

### BACKGROUND OF THE DISCLOSURE

Lawnmowers typically include frames supported by a plurality of wheels which move the frame over a terrain. A mower deck is suspended from the frame by a mower deck suspension. The mower deck houses one or more cutting implements that are driven to cut underlying vegetation. An operator can adjust the height of the mower deck between a lowermost position and an uppermost position using the mower deck suspension.

Mower deck suspensions typically include one or more front linkages and one or more rear linkages extending between the mower deck and the frame. The height of the mower deck is based on the angular orientation of the front and rear linkages. Ideally, adjusting the height of the mower deck should not affect the angular orientation of the mower deck. However, suspension systems often suffer from tolerance issues which cause the mower deck to cant when subjected to height adjustment. Typical suspension systems lack mechanisms to effectively correct tolerance issues, which results in mower deck canting at one or more height of cut positions.

### BRIEF DESCRIPTION OF THE DISCLOSURE

Although existing systems may be able to adjust the height of the mower deck, improved lawnmower deck adjustment systems may be desired. In particular, deck adjustment systems which allow for easy correction of tolerance issues without resulting in deck misalignment and canting would be advantageous.

Aspects and advantages of the invention will be set forth in part in the following description, or may be obvious from the description, or may be learned through practice of the invention.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures.
FIG. 1 is a side view of a portion of a lawnmower in accordance with embodiments of the present disclosure;
FIG. 2 is a side view of a portion of a lawnmower in accordance with embodiments of the present disclosure;
FIG. 3 is an enlarged side view of a rear linkage mount associated with a linkage system of the lawnmower in accordance with embodiments of the present disclosure;
FIG. 4 is a schematic view of a front linkage mount associated with a linkage system of the lawnmower in accordance with embodiments of the present disclosure; and
FIG. 5 is a schematic view of a rear linkage mount associated with a linkage system of the lawnmower in accordance with embodiments of the present disclosure.

Repeat use of reference characters in the present specification and drawings is intended to represent the same or analogous features or elements of the present invention.

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

It has been found that the angle of cutting implements relative to the vegetation being cut and the direction of travel has an impact on cutting effectiveness and efficiency. Cutting implements have ideal orientations relative to the vegetation and direction of travel that are associated with maximum cutting effectiveness and efficiency. If the cutting implements become canted (angled) relative to their ideal orientation, cutting effectiveness and efficiency decreases. Therefore, it is desirable to maintain the cutting implements in the ideal, or substantially ideal, orientation at all times during cutting operations.

The angle of cutting implements in lawnmowers is often negatively impacted by tolerance issues. Tolerance issues can arise for many reasons. For example, frames and mower decks are often built with loose tolerances or develop tolerancing issues after prolonged use as the mower deck and frame are flexed and strained under various operating loads and as a result of poor maintenance or damage. Inexact placement of linkage mounts on the frame or mower deck during manufacturing, improper linkage lengths, incorrect frame sizing or coupling issues incurred during assembly of the lawnmower can all result in tolerance issues.

Linkages coupling the frame and mower deck together are affected by these tolerance issues. By correcting for these tolerance issues using traditional lawnmower linkages, the angle of cut is negatively and incurably effected. That is, adjusting traditional lawnmower linkages to account for tolerance issues, typically causes the mower deck to cant from the ideal orientation at one or more different height of cut positions. As a result, traditional lawnmowers often operate with cutting implements disposed at less-than-ideal orientations in order to correct for tolerance issues.

In general, systems and methods described herein allow an operator to correct tolerance issues, e.g., associated with lawnmower frames and decks, without compromising the cutting angle of one or more cutting implements supported by the mower deck.

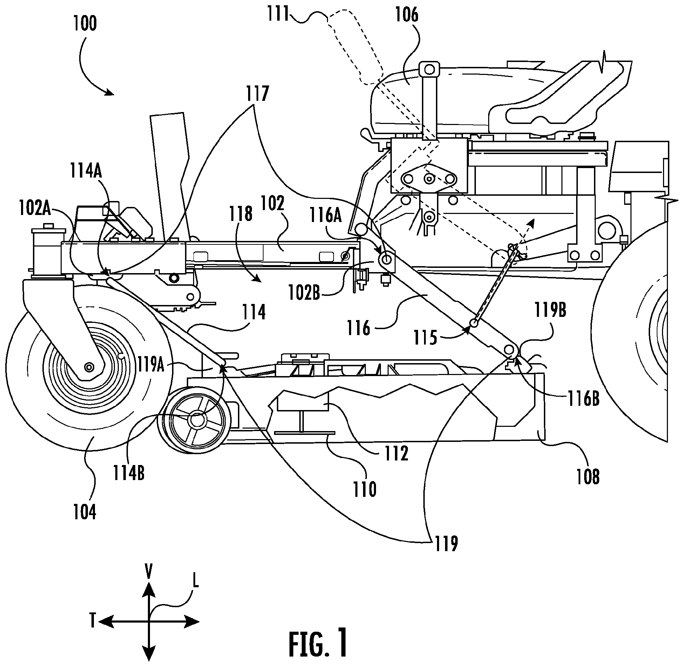

Referring now to the drawings, FIG. 1 is a side view of a portion of a lawnmower 100 in accordance with an embodiment of the present disclosure. As illustrated, lawnmower 100 generally defines a vertical direction V, a lateral direction L, and a transverse direction T, each of which is mutually perpendicular, such that an orthogonal coordinate system is generally defined. The lawnmower 100 is a riding lawnmower including a frame 102 supported by wheels 104. A seat 106 is disposed on the frame 102 to support a rider. When assembled, the rider can operate the lawnmower 100 from a seated or standing position.

In some embodiments, the frame 102 includes a discrete front frame bracket 102A and a rear frame bracket 102B that is disposed rearward from the front frame bracket 102A (e.g., along the transverse direction T). Generally, the rear frame bracket 102B may be disposed at a fixed vertical height (e.g., relative to the front frame bracket 102A or other portions of the frame 102). A moveable mower deck 108 is supported by the frame 102 and houses one or more cutting implements 110 that, when driven, cut underlying vegetation, such as grass. The cutting implements 110 can be driven by a motor 112. The motor 112 is fixedly supported by the mower deck 108 such that the cutting implements 110 move together with the mower deck 108 in a relatively fixed relationship therewith.

The distance between the cutting implements 110 and the underlying ground surface affects the height of cut during mowing operations. As the cutting implements 110 are raised, the height of cut increases. As the cutting implements 110 are lowered, the height of cut decreases. The operator can move a height-of-cut adjustment interface between two or more relative positions to raise and lower the mower deck 108 relative to the underlying ground surface. For instance, such an interface may include an actuator arm 111 (e.g., including or provided as an engagement handle, pedal, or other suitable mechanical lever) coupled or attached to the mower deck 108 (e.g., indirectly) to selectively move the same (e.g., vertically). Using stop features or detents, the operator can temporarily lock the mower deck 108 at a desired height of cut during a cutting operation (e.g., as would be understood in light of the present disclosure). With the cutting implements 110 actively driven, the lawnmower 100 can then traverse the underlying ground surface to cut vegetation at the desired height of cut.

The mower deck 108 is moveably coupled to the frame 102 through a linkage system 118. One type of linkage system 118 is a parallelogram suspension formed by one or more front linkage arms 114 and one or more rear linkage arms 116. The front and rear linkage arms 114 and 116 may each be pivotably coupled to the frame 102 of the lawnmower 100. The front linkage arms 114 or rear linkage arms 116 may have fixed, or relatively fixed, (non-adjustable) lengths. Thus, a front linkage arm 114 or rear linkage arm 116 may define a fixed arm length from an upper mounting point to a lower mounting point. As an example, the front linkage arms 114 may define a fixed front-arm length from an upper front mounting point 114A to a lower front mounting point 114B. In optional embodiments, the upper front mounting point 114A is vertically fixed relative to the front frame bracket 102A or frame 102 generally. As an additional or alternative example, the rear linkage arm 116 may define a fixed rear-arm length from an upper rear mounting point 116A to a lower rear mounting point 116B. Moreover, the front and rear linkage arms 114 and 116 each pivot relative to the frame 102 and mower deck 108 between a lowermost position (e.g., as indicated at 200A) and an uppermost position (e.g., as indicated at 200B). For instance, a front linkage arm 114 may be pivotably attached to a front frame bracket 102A (e.g., to support a front end of a moveable deck 108).

Optionally, each front linkage arm 114 may be attached to a discrete corresponding front frame bracket 102A. Moreover, each front linkage arm 114 may pivotably attach (e.g., at a hook or catch) to the moveable deck 108 at a lower front end of the deck 108. Additionally or alternatively, a rear linkage arm 116 may be pivotably attached to a rear frame bracket 102B. In some such embodiments, each rear linkage arm 116 is pivotably attached to a corresponding rear frame bracket 102B. Each rear linkage arm 116 may pivotably attach (e.g., via a pivot pin or bolt) to the moveable deck 108 to maintain a constant relative height between the two. Thus, the lower rear mounting point 116B may be pivotably attachable at a fixed vertical height relative to the mower deck 108.

In certain embodiments, the actuator arm 111 attaches (e.g., directly or via one or more intermediate linkages) to the parallelogram suspension at the rear linkage arm 116. Specifically, a lift point 115 at which actuator arm 111 attaches (e.g., directly or indirectly) may be defined along the length of rear linkage arm 116. Specifically, the lift point 115 may be defined on the rear linkage arm 116 between an upper rear mounting point 116A (e.g., at the rear frame bracket 102B) and a lower rear mounting point 116B (e.g., at the moveable deck 108). In turn, movement of actuator arm 111 may be transferred to rear linkage arm 116 at lift point 115 to pull the rear linkage arm 116 (and thereby the rest of the parallelogram suspension) at the lift point 115.

During use, the mower deck 108 lowers and raises (e.g., via the actuator arm 111) as the front and rear linkage arms 114 and 116 pivot between the lowermost position and the uppermost position. Under ideal operating conditions, the front and rear linkage arms 114 and 116 pivot in parallel with one another while raising and lowering the mower deck 108. As such, the mower deck 108 is maintained at a generally constant orientation through an entire motion of travel.

As noted above, a front linkage arms 114 may be pivotably attached to the frame 102 to support a front end of a moveable deck 108 while a rear linkage arm 116 is attached to support a rear end of the moveable deck 108. In order to properly raise and lower the mower deck 108, parallelogram suspensions require parallel orientation between the front and rear arms 114 and 116 and parallel orientation between the linkage mounts 117 associated with the frame 102 and linkage mounts 119 associated with the mower deck 108. When assembled, one of the issues that can arise in traditional mower designs is that the linkage arms 114, 116 may hold the mower deck at an improper rake, orientation, or deck angle (e.g., due to tolerance issues or difficulties during assembly). This may occur even if the linkage arms 114, 116 are assembled in a mutually parallel orientation. Moreover, it may create difficulties in ensuring a consistent or desirable performance. For instance, the mower deck 108 may cant or be canted from a target or ideal rake, which in turn may result in the cutting implements 110 operating in a less effective and efficient manner.

Traditionally, linkage systems having one or more linkages with an adjustable length were provided to adjust aspects of the linkage arms 114, 116 orientations (e.g., to maintain a mutually parallel orientation), such as by adjusting the length of the front arm 114. If tolerancing issues required adjustment, i.e., the mower deck required leveling, the operator could adjust the length of the front linkages to make the linkage arms parallel with respect to one another. To adjust the length of the linkage, the operator was required to manually adjust (e.g., tighten or loosen) a nut attached to the linkage, such as to raise or lower the position of an upper portion of the linkage at a front end of the mower deck. Additionally or alternatively, the linkage could be shortened or lengthened by threadably screwing one part of the linkage into or out of another part of the linkage. However, existing solutions, while potentially improving misalignment caused by tolerance issues and restoring the proper rake at one cutting height compromise the integrity of the parallelogram due to the introduction of a difference in linkage lengths. This results in the mower deck being canted (angled) at other cutting heights because the adjusted linkage is now different in length than the non-adjusted linkage. If the lawnmower instead included adjustable front and rear linkages and the operator attempted to mirror the linkage lengths between the front and rear linkages to correct for the new misalignment, the original tolerance issue would return. Thus, traditional linkage systems are incapable of addressing tolerance issues while maintaining cutting implements in their ideal orientations for optimal cutting effectiveness and efficiency at all cutting heights.

Additionally, traditional linkage systems are difficult to adjust. Traditional linkages utilize adjustable front linkages and fixed rear linkages. Linkage mounts on the frame associated with the front linkages are often located in difficult to reach positions that are often surrounded by other components and hardware, making it hard to reach the linkage mounts and manipulate the length of the front linkages. Moreover, as traditional linkage systems often include left and right analogues for each of the front and rear linkages, any adjustment made to one of the front or rear linkages requires similar adjustment to the other of the front or rear linkages. As a result, the operator must repeatedly access difficult to reach locations on both sides of the lawnmower.

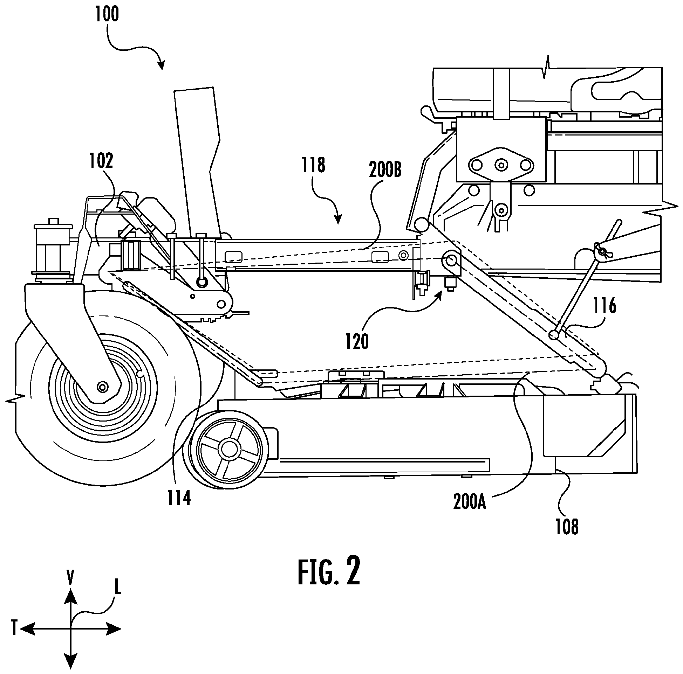

Referring to FIG. 2, in accordance with an embodiment, the linkage system 118 of the lawnmower 100 includes the aforementioned front and rear linkage arms 114 and 116. The front linkage arm 114 can have a relatively fixed length and can be fixedly rotatably coupled to the frame 102. That is, the front linkage arm 114 can rotate relative to the frame 102 but is not readily detachable therefrom. The rear linkage arm 116 can have a relatively fixed length (e.g., between the upper rear mounting point 116A and the lower rear mounting point 116B). The rear linkage arm 116 can extend from the mower deck 108 to a rear linkage mount 120 (e.g., provided as or as part of bracket 102B). The rear linkage arm 116 may be pivotably or rotatably coupled to the rear linkage mount 120 (e.g., at the upper rear mounting point 116A).

Unlike with traditional linkage systems that utilize linkages with adjustable lengths, adjusting the linkage system 118 using the rear linkage mount 120 does not affect the length of the front or rear linkage arms 114 or 116. As a result, adjustments to the linkage system 118 performed at the rear linkage mount 120 do not affect the angle of the mower deck 108 as the mower deck 108 is raised and lowered. That is, the mower deck 108 can advantageously be raised and lowered while maintaining orientation, such as for improved maximum cutting effectiveness and efficiency (e.g., in comparison to traditional systems).

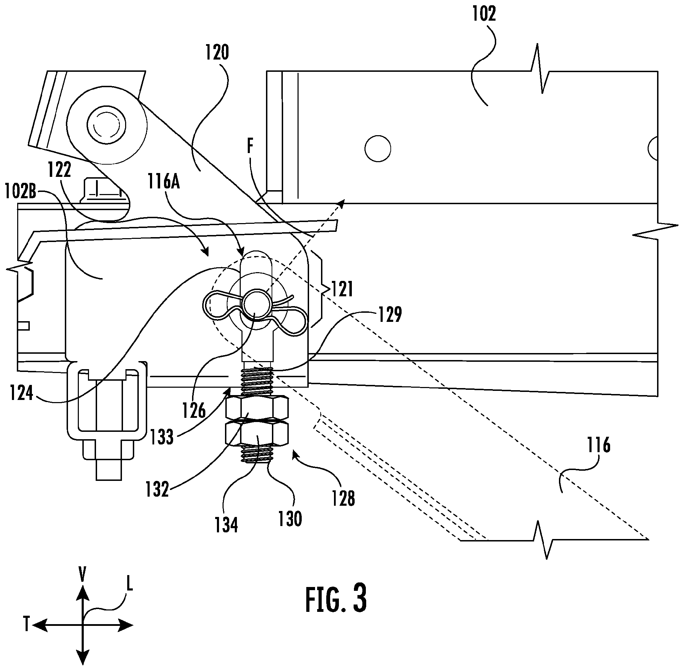

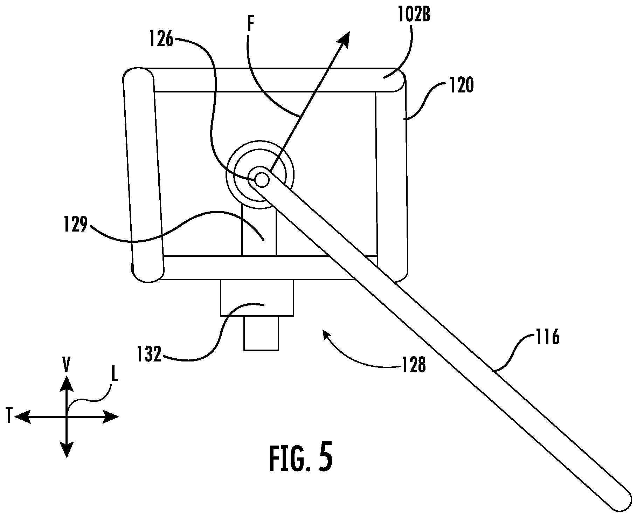

FIGS. 3 and 5 illustrate an enlarged and a schematic view, respectively, of the rear linkage mount 120 as seen coupled between the frame 102 and the rear linkage arm 116. The rear linkage mount 120 can be coupled to the frame 102 (e.g., at 102B). It should be understood that for mower decks 108 having a plurality of rear linkage arms 116 (e.g., a left rear linkage and a right rear linkage), the rear linkage mount 120 depicted in FIGS. 3 and 5 may also be used with the other of the plurality of rear linkage arms 116 or another rear linkage mount 120 can be disposed at a location associated with the other rear linkage arm 116.

The rear linkage mount 120 can define a moveable interface 122 configured to permit moveable engagement between the rear linkage arm 116 and the rear linkage mount 120. Specifically, the moveable interface 122 may define a vertical lift path 121 on which the upper rear mounting point 116A is moveable relative to the frame 102 (e.g., at the rear frame bracket 102B) between a high (e.g., uppermost) position and a low (e.g., lowermost) position disposed below the high position. In an embodiment, the moveable interface 122 can include an attachment slot 124 and a pin 126 interacting with the attachment slot 124. The rear linkage arm 116 can be coupled to the pin 126. For example, the rear linkage arm 116 can include an aperture through which the pin 126 extends. Alternatively, the pin 126 can be part of the rear linkage arm 116 (e.g., as a monolithic unitary member). The attachment slot 124 may extend along the vertical lift path 121 (e.g., to define the same). When assembled, the pin 126 may be slidably disposed within the attachment slot 124. In turn, the pin 126 can move within the attachment slot 124 to guide the rear linkage arm 116 between a first position (associated with a low, lowest, or lowermost position of the pin 126 in the attachment slot 124) and a second position (associated with a high, highest, or uppermost position of the pin 126 in the attachment slot 124), and any position between the first position and the second position. The pin 126 can be coupled to a lock 128 that maintains the pin 126 at a fixed relative position with respect to the attachment slot 124.

The lock 128 can include an adjustable interface, such as an adjustment rod 129 on which the pin 126 is supported to move therewith (e.g., relative to the frame 102, such as at the rear frame bracket 102B). As shown, the adjustment rod 129 may extend below the upper rear mounting point 116A and support the pin 126 relative to the frame 102. In some embodiments, the adjustment rod 129 may extend in an upper (e.g., vertical) or other direction from the upper rear mounting point 116A. In some embodiments, the adjustment rod 129 provides a threaded interface 130 while an adjustable element, such as a nut 132, is moveably provided along (e.g., roto-translatably supported on) the threaded interface 130. In some instances, a jam nut 134 or other retention mechanism can be used to maintain the location of the nut 132 at a desired location along the threaded interface 130. The location of the pin 126 within the attachment slot 124 can be at least partially maintained by the location of the nut 132 along the threaded interface 130. As the nut 132 is moved along the threaded interface 130, the relative position of the pin 126 within the attachment slot 124 changes. As a result, the relative position and orientation of the rear linkage arm 116 changes, affecting the linkage system 118 and correcting for tolerance issues. That is, rather than make the rear linkage arm 116 itself shorter, the rear linkage mount 120 moves the rear linkage arm 116 in an upward direction to effectively (but not actually) shorten the length of the linkage system 118.

Weight of the mower deck 108 and linkage system 118 creates reaction force experienced at the rear linkage mount 120. Some of the reaction force is transmitted to the pin 126 through the rear linkage arm 116. Due to the geometry of the linkage system 118, the reaction force is typically oriented in a generally upward direction as shown by arrowed line F. The angular orientation of the generally upward direction may be different from that depicted by arrowed line F. In an embodiment, the generally upward direction is oriented above a horizontal plane, as measured when the lawnmower 100 is disposed on level ground. This upward reaction force causes the pin 126 to move upward in the attachment slot 124 of the rear linkage mount 120. However, the pin 126 is captured by a feature of the threaded interface 130 and the nut 132 is disposed along the threaded interface 130 at a position to restrain upward movement caused by the reaction force. The location of the nut 132 along the threaded interface 130 sets the uppermost position of the rear linkage arm 116 by preventing further upward travel of the pin 126 once the nut 132 contacts a stopping surface 133, e.g., of the rear linkage mount 120. The reaction force and nut 132 operate against one another to maintain the rear linkage arm 116 at a set height. The height of the rear linkage arm 116, as measured with respect to the frame 102, can be changed by moving the nut 132 along the threaded interface 130 to correct for tolerance issues. However, unlike with traditional linkages, movement of the nut 132 shifts the entire parallelogram of the linkage system 118, i.e., moves both the front and rear linkage arms 114 and 116, without breaking parallel geometry. As a result, tolerance issues can be accounted for and the mower deck 108 can be raised and lowered while maintaining the ideal orientation of the cutting implement 110.

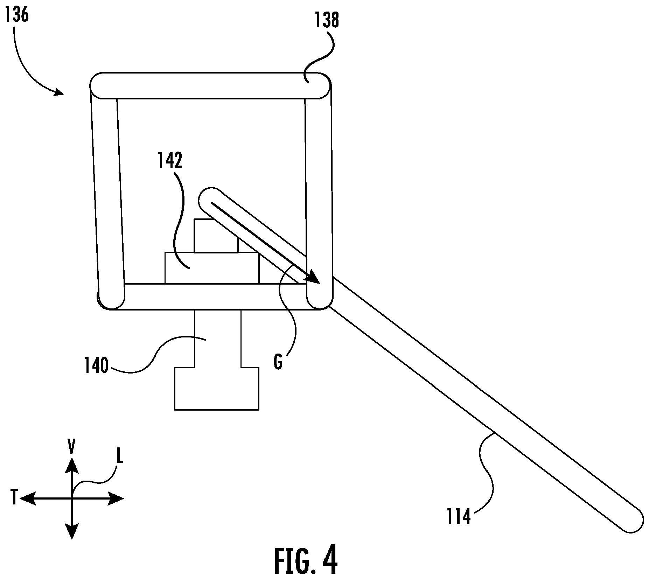

FIG. 4 illustrates a schematic view of the linkage system 118 in accordance with an embodiment where the front linkage arm 114 includes a front linkage mount 136. The front linkage mount 136 can be used instead of, or in addition to, the aforementioned rear linkage mount 120 to correct for tolerance issues by allowing an operator to move the front linkage arm 114 relative to the frame 102. The front linkage mount 136 can include a structure 138 coupled to the frame 102 (e.g., provided as or as part of bracket 102A). The structure 138 can include an adjustable interface, such as a threaded interface 140, and an adjustable element, such as a nut 142, moveable along the threaded interface 140. In some instances, a jam nut (not illustrated) or other retention mechanism can be used to maintain the location of the nut 142 at a desired location along the threaded interface 140. The threaded interface 140 can be coupled to the front linkage arm 114 through a pivotable engagement. As the threaded interface 140 is moved upward as a result of moving the nut 142 along the threaded interface 140 in a first direction, the front linkage arm 114 is raised. Conversely, as the threaded interface 140 is moved downward as a result of moving the nut 142 along the threaded interface 140 in a second direction opposite the first direction, the front linkage arm 114 is lowered.

Weight of the mower deck 108 and linkage system 118 can create reaction force. Some of the reaction force is transmitted to the threaded interface through the front linkage mount 136. Due to the geometry of the linkage system 118, the reaction force is typically oriented in a generally downward direction as shown by arrowed line G. The angular orientation of the generally downward direction may be different from that depicted by arrowed line G. In an embodiment, the generally downward direction is oriented below a horizontal plane, as measured when the lawnmower 100 is disposed on level ground. This downward reaction force is supported by the threaded interface 140 and the nut 142. The height of the front linkage mount136, as measured with respect to the frame 102, can be changed by moving the nut 142 along the threaded interface 140 to correct for tolerance issues. However, as described above, movement of the nut 140 shifts the entire parallelogram of the linkage system 118, i.e., moves both the front and rear linkage arms 114 and 116, without breaking parallel geometry. As a result, tolerance issues can be accounted for and the mower deck 108 can be raised and lowered while maintaining the ideal orientation of the cutting implement 110.

Reference made herein with respect to front and rear is not meant to be limiting and is made with specific reference to the orientation of the linkage and not the orientation of the lawnmower. In a non-illustrated embodiment, the linkage system 118 can be inverted such that the linkage arms 114 and 116 extend from the frame 102 in a forward direction, rather than a rearward direction as depicted. The rear linkage mount 120 would thus be moved to a forward end of the lawnmower 100 or the front linkage mount 136 would be moved to a rear end of the lawnmower 100.

Embodiment 1. A deck leveling system comprising: a front frame bracket; a rear frame bracket disposed rearward along a transverse direction at a fixed height along a vertical direction relative to the front frame bracket; a front first linkage arm pivotably attached to either the front frame bracket to support a front end of a moveable deck or the rear frame bracket to support a rear end of the moveable deck, the first linkage arm defining a fixed arm length from a first upper mounting point to a first lower mounting point to support the moveable deck; a rear second linkage arm pivotably attached to the other of the front frame bracket to support the front end of the moveable deck or the rear frame bracket to support the rear end of the moveable deck defining a fixed rear-arm length from an upper rear mounting point to a lower rear mounting point to support a rear end of the moveable deck; and a rear linkage mount supported on the whichever of the front or rear frame bracket is attached to the first linkage arm and connected to the rear first linkage arm at the first upper rear mounting point, the rear linkage mount comprising a moveable interface defining a vertical lift path on which the first upper rear mounting point is moveable relative to the rear supported-on frame bracket between a high position and a low position disposed below the high position.

Embodiment 2. The deck leveling system of any one or more of the embodiments, wherein the first lower mounting point is pivotably attachable at a fixed vertical height relative to the moveable deck.

Embodiment 3. The deck leveling system of any one or more of the embodiments, wherein a lift point is defined on the first linkage arm between the first upper mounting point and the first lower mounting point.

Embodiment 4. The deck leveling system of any one or more of the embodiments, further comprising an actuator arm attached to the first linkage arm at the lift point to pull the first linkage arm at the lift point.

Embodiment 5. The deck leveling system of any one or more of the embodiments, wherein the linkage mount defines an attachment slot extending along the vertical lift path and comprises an attachment pin slidably disposed within the attachment slot.

Embodiment 6. The deck leveling system of any one or more of the embodiments, wherein the linkage mount further comprises an adjustment rod extending from the first upper mounting point, and wherein the attachment pin is supported on the adjustment rod to move therewith relative to the supported-on frame bracket.

Embodiment 7. The deck leveling system of any one or more of the embodiments, wherein the adjustment rod defines a threaded interface on which an adjustment nut is roto-translatably supported.

Embodiment 8. The deck leveling system of any one or more of the embodiments, wherein the second linkage arm defines a fixed arm length from a second upper mounting point to a second lower mounting point.

Embodiment 9. The deck leveling system of any one or more of the embodiments, wherein the second upper mounting point is vertically fixed relative to the other of the front frame bracket or rear frame bracket.

Embodiment 10. A lawnmower comprising: a frame; a rotatable blade disposed below at least a portion of the frame; a moveable deck on which the rotatable blade is supported; and an adjustable linkage assembly connecting the moveable deck to the frame, the adjustable linkage assembly comprising: a front linkage arm pivotably attached to the frame to support a front end of the moveable deck, a rear linkage arm defining a fixed rear-arm length from an upper rear mounting point to a lower rear mounting point to support a rear end of the moveable deck, and a rear linkage mount supported on the frame and connected to the rear linkage arm at the upper rear mounting point, the rear linkage mount comprising a moveable interface defining a vertical lift path on which the upper rear mount point is moveable relative to the frame between a high position and a low position disposed below the high position.

Embodiment 11. The lawnmower of any one or more of the embodiments, wherein the lower rear mounting point is pivotably attached at a fixed vertical height relative to the moveable deck.

Embodiment 12. The deck leveling system of any one or more of the embodiments, wherein a lift point is defined on the rear linkage arm between the upper rear mounting point and the lower rear mounting point.

Embodiment 13. The deck leveling system of any one or more of the embodiments, further comprising an actuator arm attached to the rear linkage arm at the lift point to pull the rear linkage arm at the lift point.

Embodiment 14. The deck leveling system of any one or more of the embodiments, wherein the rear linkage mount defines an attachment slot extending along the vertical lift path and comprises an attachment pin slidably disposed within the attachment slot.

Embodiment 15. The deck leveling system of any one or more of the embodiments, wherein the rear linkage mount further comprises an adjustment rod extending below the lower rear mounting point, and wherein the attachment pin is supported on the adjustment rod to move therewith relative to the frame.

Embodiment 16. The deck leveling system of any one or more of the embodiments, wherein the adjustment rod defines a threaded interface on which an adjustment nut is roto-translatably supported.

Embodiment 17. The deck leveling system of any one or more of the embodiments, wherein the front linkage arm defines a fixed front-arm length from an upper front mounting point to a lower front mounting point.

Embodiment 18. The deck leveling system of any one or more of the embodiments, wherein the upper front mounting point is vertically fixed relative to the frame.

Embodiment 19. The deck leveling system of any one or more of the embodiments, wherein the lower front mounting point vertically fixed relative to the moveable deck.

Embodiment 20. The deck leveling system of any one or more of the embodiments, further comprising a blade motor supported on the moveable deck in mechanical communication with the rotatable blade.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A deck leveling system comprising:
a front frame bracket;
a rear frame bracket disposed rearward along a transverse direction at a fixed height along a vertical direction relative to the front frame bracket;
a front linkage arm pivotably attached to the front frame bracket to support a front end of a moveable deck;
a rear linkage arm defining a fixed rear-arm length from an upper rear mounting point to a lower rear mounting point to support a rear end of the moveable deck; and
a rear linkage mount supported on the rear frame bracket and connected to the rear linkage arm at the upper rear mounting point, the rear linkage mount comprising a moveable interface defining a vertical lift path on which the upper rear mount point is moveable relative to the rear frame bracket between a high position and a low position disposed below the high position.

2. The deck leveling system of claim 1, wherein the lower rear mounting point is pivotably attachable at a fixed vertical height relative to the moveable deck.

3. The deck leveling system of claim 1, wherein a lift point is defined on the rear linkage arm between the upper rear mounting point and the lower rear mounting point.

4. The deck leveling system of claim 1, wherein the rear linkage mount defines an attachment slot extending along the vertical lift path and comprises an attachment pin slidably disposed within the attachment slot.

5. The deck leveling system of claim 5, wherein the rear linkage mount further comprises an adjustment rod extending below the lower rear mounting point, and wherein the attachment pin is supported on the adjustment rod to move therewith relative to the rear frame bracket.

6. The deck leveling system of claim 6, wherein the adjustment rod defines a threaded interface on which an adjustment nut is roto-translatably supported.

7. The deck leveling system of claim 1, wherein the front linkage arm defines a fixed front-arm length from an upper front mounting point to a lower front mounting point.

8. The deck leveling system of claim 8, wherein the upper front mounting point is vertically fixed relative to the front frame bracket.

9. A lawnmower comprising:
a frame;
a rotatable blade disposed below at least a portion of the frame;
a moveable deck on which the rotatable blade is supported; and
an adjustable linkage assembly connecting the moveable deck to the frame, the adjustable linkage assembly comprising:
a front linkage arm pivotably attached to the frame to support a front end of the moveable deck,
a rear linkage arm defining a fixed rear-arm length from an upper rear mounting point to a lower rear mounting point to support a rear end of the moveable deck, and
a rear linkage mount supported on the frame and connected to the rear linkage arm at the upper rear mounting point, the rear linkage mount comprising a moveable interface defining a vertical lift path on which the upper rear mount point is moveable relative to the frame between a high position and a low position disposed below the high position.

10. The lawnmower of claim 9, wherein the lower rear mounting point is pivotably attached at a fixed vertical height relative to the moveable deck.

11. The lawnmower of claim 9, wherein a lift point is defined on the rear linkage arm between the upper rear mounting point and the lower rear mounting point.

12. The lawnmower of claim 9, wherein the rear linkage mount defines an attachment slot extending along the vertical lift path and comprises an attachment pin slidably disposed within the attachment slot.

13. The lawnmower of claim 12, wherein the rear linkage mount further comprises an adjustment rod extending below the lower rear mounting point, and wherein the attachment pin is supported on the adjustment rod to move therewith relative to the frame.

14. The lawnmower of claim 13, wherein the adjustment rod defines a threaded interface on which an adjustment nut is roto-translatably supported.

15. The lawnmower of claim 9, wherein the front linkage arm defines a fixed front-arm length from an upper front mounting point to a lower front mounting point.
